# EUROPÄISCHE PATENTSCHRIFT

(11) **EP 2 706 280 B1**
(45) Veröffentlichungstag und Bekanntmachung des Hinweises auf die Patenterteilung: **18.03.2015**
(21) Anmeldenummer: 12006361.5
(22) Anmeldetag: 10.09.2012
(51) Int. Cl.: F16L 53/00

(54) **Steckverbinder**
Push-in connector
Connecteur enfichable

(43) Veröffentlichungstag der Anmeldung: 12.03.2014
(73) Patentinhaber: NORMA Germany GmbH, 63477 Maintal (DE)
(72) Erfinder: Mann,Stephan, 63599 Biebergemünd (DE); Seibel,Knut, 63674 Altenstadt (DE); Semmel,Patrick, 63589 Linsengericht (DE)
(74) Vertreter: Patentanwälte Olbricht Buchhold Keulertz

(56) Entgegenhaltungen:
- WO-A1-02/38426
- WO-A2-2009/013342
- DE-A1-102007 036 533
- DE-A1-102008 018 658
- DE-U1-202008 005 790
- FR-A1- 2 924 786
- US-A1- 2007 176 418
- US-A1- 2011 073 585

## Beschreibung

Die Erfindung betrifft einen Steckverbinder mit einem Gehäuse, das einen Aufnahmeraum, einen Anschlussstutzen und einen den Aufnahmeraum und den Anschlussstutzen verbindenden Kanal aufweist, wobei im Inneren des Kanals eine Heizzone vorgesehen ist.

Die Erfindung wird im Folgenden anhand einer Fluidleitung erläutert, die verwendet wird, um Harnstoff von einem Vorratsbehälter zu einer Verbrauchsstelle zu transportieren. Harnstoff (UREA) wird bei Dieselmotoren verwendet, um die Emission von Stickoxiden zu verringern.

Die Verbindung zwischen der Fluidleitung und dem Vorratsbehälter und die Verbindung zwischen der Fluidleitung und der Verbrauchsstelle werden vielfach mit einem Steckverbinder der eingangs genannten Art hergestellt. Ein derartiger Steckverbinder kann auch verwendet werden, um mehrere Leitungsabschnitte miteinander zu verbinden. Der Steckverbinder weist einen Anschlussstutzen auf, auf den die Leitung, beispielsweise ein Schlauch oder ein Rohr, aufgeschoben werden kann. Am entgegengesetzten Ende ist ein Aufnahmeraum vorgesehen, in dem ein Stutzen des Vorratsbehälters oder ein Stutzen der Verbrauchsstelle eingeführt werden kann. Zwischen dem Aufnahmeraum und dem Anschlussstutzen ist ein Kanal vorgesehen, um einen Durchfluss von Flüssigkeit durch den Steckverbinder zu ermöglichen.

Zur Beheizung ist ein Heizelement durch den Anschlussstutzen geführt, das vielfach auch noch durch die Leitung geführt ist, um die dort befindliche Flüssigkeit im Bedarfsfall zu erwärmen. Allerdings ist es vielfach erforderlich, das Heizelement aus dem Steckverbinder herauszuführen, um die nötigen Energieversorgungsverbindungen zum Heizelement, in der Regel elektrische Verbindungen, herzustellen.

UREA verliert seine Fließfähigkeit bei einer Temperatur von etwa minus 11°C. Es gibt daher Vorschriften, die regeln, in welchem Zeitraum eine UREA-Leitung aufgetaut werden muss, damit sie in einem Kraftfahrzeug eingesetzt werden kann. Je länger der Auftauvorgang dauert, desto länger werden Stickoxide in die Umgebung abgegeben

Aus DE 10 2007 036 533 A1 ist eine beheizbare Fluidleitungskupplung bekannt. Die Fluidleitungskupplung umfasst ein Aufnahmeteil, einen Anschluss sowie ein zwischen Aufnahmeteil und Anschluss angeordnetes Heizelement. Ein Kontaktbereich zwischen Heizelement und Fluidleitungsinnenraum kann durch eine hohlzylinderartige Fluidkontakthülse gebildet werden.

WO 2009/013342 A2 zeigt einen Leitungsverbinder und eine Medienleitung, die beide durch einen um innere Leitungswände gewickelten Heizdraht erwärmt werden können.

Aus DE 10 2008 018 658 A1 ist eine beheizbare Medienleitung bekannt. Ein Heizdraht verläuft umgeben von einem wärmeleitfähigen Formkörper innerhalb der Medienleitung. Der Heizdraht kann durch ein separates Anschlussgehäuse aus der Medienleitung herausgeführt sein.

Aus FR 2 924 786 A1 sind ein Steckverbinder und eine beheizbare Medienleitung bekannt. Ein Heizdraht ist an einer Außenseite des Steckverbinders bzw. der Medienleitung angeordnet.

WO 02/38426 A1 zeigt einen Verteiler mit zwei Fluidanschlüssen sowie einem separaten Anschluss für einen Heizdraht. Der Heizdraht verläuft dabei lose innerhalb des Verteilers.

Der Erfindung liegt die Aufgabe zugrunde, eine schnelle Erwärmung einer Flüssigkeitsleitung mit einem Steckverbinder zu ermöglichen.

Diese Aufgabe wird bei einem Steckverbinder der eingangs genannten Art dadurch gelöst, dass ein Wärmeleitelement zwischen der Heizzone und dem Aufnahmeraum angeordnet ist, wobei das Wärmeleitelement einen Wärmeabgabeabschnitt aufweist, der als Zylinderhülse ausgebildet ist, die einen Innenraum umgibt und wobei die Zylinderhülse einen länglichen Schlitz aufweist.

Eine Schwachstelle beim Auftauen einer Leitung mit einem Steckverbinder der eingangs genannten Art ist das Flüssigkeitsvolumen, das im Steckverbinder angeordnet ist. Es ist relativ schwierig, ein Heizelement so anzuordnen, dass es dieses Flüssigkeitsvolumen direkt beheizen kann. Erfindungsgemäß wird die Beheizung nun auf andere Weise vorgenommen. Man entnimmt Wärme aus der Heizzone und leitet sie mit Hilfe des Wärmeleitelements in den Aufnahmeraum. Ein Wärmeleitelement muss lediglich in der Lage sein, Wärme mit möglichst geringen Verlusten zu transportieren. Es ist nicht erforderlich, dass das Wärmeleitelement selbst Wärme erzeugen kann. Dadurch werden der Aufbau eines Wärmeleitelements und die Konstruktion eines Steckverbinders mit einem derartigen Wärmeleitelement sehr einfach, weil das Wärmeleitelement selbst keine Anschlüsse benötigt, über die man beispielsweise elektrische Energie zuführen kann. Außerdem weist das Wärmeleitelement einen Wärmeabgabeabschnitt auf, der als Zylinderhülse ausgebildet ist, die einen Innenraum umgibt. Die Zylinderhülse kann dabei zumindest teilweise auf einem Kreiszylinder beruhen. Es sind aber beliebige andere Querschnitte möglich. Durch eine Zylinderhülse wird sichergestellt, dass Wärme in zwei Richtungen abgestrahlt werden kann, nämlich radial nach außen und radial nach innen in den Innenraum. Damit wird die Fläche, über die Wärme übertragen werden kann, auf einfache Weise groß gehalten. Weiterhin weist die Zylinderhülse einen länglichen Schlitz auf. Durch diesen Schlitz kann Flüssigkeit aus dem Innenraum nach außen gelangen oder von außen in den Innenraum hinein, je nach Fließrichtung der Flüssigkeit. Die Zylinderhülse bildet also in radialer Richtung keine Blockierung für die Flüssigkeit. Es kann sich also ohne weiteres Flüssigkeit außerhalb und innerhalb der Zylinderhülse befinden, was die Wärmeübertragung an die Flüssigkeit verbessert.

Vorzugsweise erstreckt sich das Wärmeleitelement in den Aufnahmeraum hinein. Die Wärme wird also vom Wärmleitelement nicht nur bis zum Aufnahmeraum transportiert, sondern sogar in den Aufnahmeraum hinein. Damit wird eine relativ große Länge zur Verfügung gestellt, über die das Wärmeleitelement Wärme an die Flüssigkeit im Aufnahmeraum abgeben kann.

Vorzugsweise ist im Aufnahmeraum eine Dichtungsanordnung angeordnet und das Wärmeleitelement ragt durch die Dichtungsanordnung hindurch. Die Dichtungsanordnung wird verwendet, um eine dichte Verbindung zwischen dem Steckverbinder und einem Stutzen herzustellen, der in den Aufnahmeraum eingeführt wird. Wenn das Wärmeleitelement durch die Dichtungsanordnung hindurchragt, ist sichergestellt, dass das Wärmeleitelement auch in den Stutzen hineinragt. Wenn die Verbindung zwischen dem Steckverbinder und dem Stutzen hergestellt ist, dann ragt das Wärmeleitelement auch in den Stutzen hinein und kann dementsprechend die dort befindliche Flüssigkeit mit erwärmen.

Vorzugsweise weist das Wärmeleitelement einen Befestigungsabschnitt auf, der in den Kanal hineingesteckt ist. Der Befestigungsabschnitt wird verwendet, um das Wärmeleitelement im Gehäuse zu befestigen. Hierzu wird es im Kanal befestigt.

Vorzugsweise weist das Wärmeleitelement entlang seiner Länge eine Außenabmessung auf, die maximal so groß ist, wie die Innenabmessung des Kanals. Die Innenabmessung des Kanals entspricht in vielen Fällen der Innenabmessung des Stutzens. Dementsprechend kann man aufgrund dieser Bemessung davon ausgehen, dass der Stutzen problemlos über das Wärmeleitelement geführt werden kann, wenn der Stutzen in den Aufnahmeraum eingeführt wird.

Vorzugsweise ist das Wärmeleitelement klemmend im Kanal gehalten. Damit ist das Wärmeleitelement ausreichend im Gehäuse befestigt. Weitere Befestigungsmittel sind nicht erforderlich.

Vorzugsweise weist das Wärmeleitelement mindestens eine Lamelle auf, die in den Innenraum hinein gerichtet ist. Diese Lamelle bildet eine zusätzliche Fläche, über die Wärme vom Wärmeleitelement an die Flüssigkeit übertragen werden kann.

Vorzugsweise schließt sich die Lamelle an einen Rand des Stutzens an. Mit anderen Worten geht die Lamelle vom Rand des Schlitzes aus und ragt in den Innenraum hinein. Dies ist eine besonders einfache Ausgestaltung des Wärmeleitelements.

Bevorzugterweise ist das Wärmeleitelement aus einem Metall, insbesondere Aluminium, Kupfer oder Messing, gebildet. Metall ist ein relativ guter Wärmeleiter. Man kann ein Metall so wählen, dass es sich problemlos mit der zu beheizenden Flüssigkeit verträgt. Das Wärmeelement kann auch aus mehreren Metallen gebildet sein, beispielsweise kann das Wärmeleitelement mehrschichtig oder beschichtet ausgeführt sein. So kann man z.B. auch versilbertes Kupfer verwenden.

Vorzugsweise ist ein Heizelement in der Heizzone angeordnet und das Wärmeleitelement steht mit dem Heizelement in wärmeleitendem Kontakt. Dies verbessert die Wärmeübertragung. Das Wärmeleitelement kann jedenfalls dort, wo es mit dem Heizelement in wärmeleitendem Kontakt steht, die Temperatur des Heizelements annehmen, die in der Regel höher ist, als die Temperatur der Flüssigkeit in der Heizzone in einer gewissen Entfernung zum Heizelement. Dies verbessert den Wärmetransport vom Heizelement in den Aufnahmeraum weiter.

Hierbei ist bevorzugt, dass das Wärmeleitelement klemmend mit dem Heizelement verbunden ist. Wenn das Wärmeleitelement klemmend mit dem Heizelement verbunden ist, dann liegt es mit einer gewissen Spannung am Heizelement an. Dies verbessert den Wärmeübergang zwischen dem Heizelement und dem Wärmeleitelement.

Vorzugsweise ist ein Rampenelement im Kanal angeordnet, entlang dessen das Heizelement aus dem Kanal herausgeführt ist, wobei das Wärmeleitelement eine Ausnehmung aufweist, die das Rampenelement aufnimmt. Man kann das Wärmeleitelement dann sozusagen um das Rampenelement herumführen, so dass es trotz des Rampenelements relativ weit in den Kanal eingeführt werden kann und vorzugsweise mit dem Heizelement klemmend verbunden werden kann.

Bevorzugterweise weist das Gehäuse eine bewegliche Verriegelungsgeometrie auf und das Wärmeleitelement ragt bis in einen Bereich, in dem die Verriegelungsgeometrie angeordnet ist. Die Verriegelungsgeometrie dient dazu, den oben erwähnten Stutzen im Aufnahmeraum festzuhalten und ihn, gegebenenfalls nach einer Bewegung der Verriegelungsgeometrie freizugeben, so dass der Steckverbinder vom Stutzen abgezogen werden kann. Da die Verrieglungsgeometrie auf den Stutzen wirkt, ist sichergestellt, dass das Wärmeleitelement bis in das Innere des Stutzens ragen kann, wenn es bis in den Bereich ragt, in dem die Verriegelungsgeometrie angeordnet ist. Man kann dann die Beheizung des Innenraums des Stutzens auch dann sicherstellen, wenn eine Dichtungsanordnung an einer anderen Position angeordnet ist und das Wärmeleitelement nicht bis in den Bereich der Dichtungsanordnung reicht. Bei einer derartigen Verriegelungsgeometrie ist es beispielsweise nicht möglich, eine Heizeinrichtung, etwa einen Heizdraht, außen am Gehäuse anzuordnen, um den Aufnahmeraum zu beheizen.

Die Erfindung wird im Folgenden anhand eines bevorzugten Ausführungsbeispiels in Verbindung mit der Zeichnung beschrieben. Hierin zeigen:
- Fig. 1: einen schematischen Längsschnitt durch einen Verbinder mit einem verbundenen Rohr, bei dem aus Gründen der Übersicht ein Wärmeleitelement weggelassen ist,
- Fig. 2: einen Schnitt II-II nach Fig. 1 mit Wärmeleitelement und
- Fig. 3: eine perspektivische Darstellung eines Wärmeleitelements.

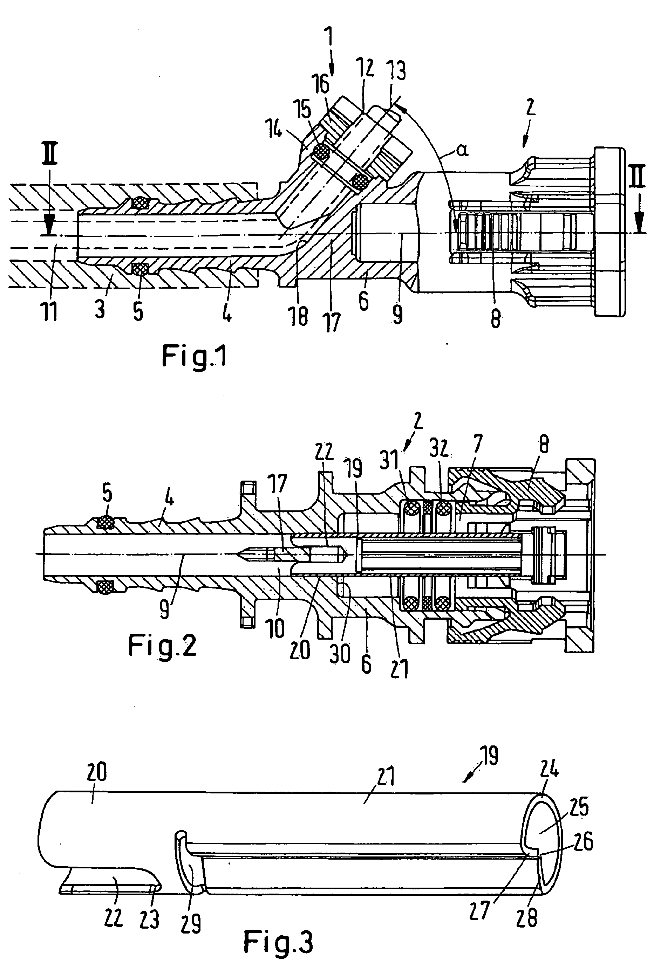

Fig. 1 zeigt zur Erläuterung einen Längsschnitt einer beheizbaren Fluidleitung 1 mit einem Steckverbinder 2 und einem Rohr 3. Das Rohr 3 ist flexibel. Es kann aus einem extrudierten Kunststoff oder auch aus einem Schlauchmaterial gebildet sein. Auch ein Schlauch soll im Folgenden unter den Begriff "Rohr" fallen.

Das Rohr 3 ist auf einen Anschlussstutzen 4 des Steckverbinders 2 aufgesteckt und dort mit einem O-Ring 5 abgedichtet. Der Anschlussstutzen 4 weist auf seiner Außenseite ein Tannenbaumprofil auf. Falls erforderlich, kann das Rohr 3 auf dem Anschlussstutzen 4 auch mit Hilfe eines Spannelements, beispielsweise einer nicht dargestellten Schlauchschelle oder dergleichen, festgehalten werden.

Der Anschlussstutzen 4 ist Bestandteil eines Gehäuses 6. Das Gehäuse 6 weist einen Aufnahmeraum 7 auf, in dem ein nicht näher dargestellter Stutzen eines Vorratsbehälters, einer Verbrauchsstelle oder einer anderen Fluidleitung eingeführt werden kann. Zum Verriegeln des Stutzens weist das Gehäuse 6 im Bereich des Aufnahmeraums 7 eine Verriegelungsgeometrie 8 auf, die parallel zu einer Längsachse 9 des Steckverbinders 1, also axial bewegbar ist.

Das Gehäuse 6 weist ferner einen Kanal 10 auf, der den Aufnahmeraum 7 und den Stutzen 4 miteinander verbindet.

Wie in Fig. 1 zu erkennen ist, ist im freien Querschnitt des Rohres 3 ein gestrichelt dargestelltes Heizmittel 11 angeordnet. Das Heizmittel 11 ist im vorliegenden Fall als flexibler Heizstab ausgebildet, der mindestens einen Heizleiter aufweist, der in ein extrudiertes Kunststoffmaterial eingebettet ist. Vorzugsweise sind zwei Heizleiter vorgesehen, die an einem vom Steckverbinder 2 entfernten Ende miteinander verbunden sind, so dass eine elektrische Verbindung nur an einem Ende des Heizmittels 11 notwendig ist. Das Heizmittel 11 ist zwar flexibel und biegbar. Es weist aber eine gewisse Eigensteifigkeit auf, so dass das Heizmittel dann, wenn das Rohr 3 (mit darin befindlichem Heizmittel) auf den Anschlussstutzen 4 aufgeschoben wird, das Heizmittel 11 in den Anschlussstutzen 4 eingeschoben werden kann.

Das Heizmittel 11 muss aus dem Steckverbinder 2 herausgeführt werden, um nicht näher dargestellte elektrische Anschlüsse herstellen zu können, über die die gewünschte Heizleistung in das Heizmittel 11 eingebracht werden kann. Dementsprechend weist der Steckverbinder 2 einen Heizmittel-Austrittskanal 12 auf, dessen Längsachse 13 unter einem Winkel α zur Längsachse 9 des Steckverbinders 2 liegt. Der Winkel α ist größer als 0° und liegt vorzugsweise im Bereich von 20° bis 80°.

Der Heizmittel-Austrittskanal 12 ist in einem Stutzen 14 angeordnet, der unter dem Winkel α zur Längsachse 9 des Steckverbinders 2 gerichtet ist. Ein O-Ring 15 ist im Stutzen 14 vorgesehen. Der O-Ring 15 liegt dichtend am Heizmittel 11 an und verhindert einen Austritt von Fluid aus dem Heizmittel-Austrittskanal 12. Der O-Ring 14 wird mit Hilfe eines Stopfens 16 im Heizmittel-Austrittskanal 12 festgehalten.

Im Kanal 10 ist ein Rampenelement 17 angeordnet, das einstückig mit dem Gehäuse 6 ausgebildet ist. Das Rampenelement 17 weist eine Führungsfläche 18 auf, die gekrümmt ist, also knickfrei ausgebildet ist. Die Führungsfläche 18 erstreckt sich von der "Unterseite" des Kanals 10, also der Seite, die dem Heizmittel-Austrittskanal 12 gegenüberliegt, bis zum Heizmittel-Austrittskanal 12 und setzt sich in einer Wand des Heizmittel-Austrittskanals 12 fort. Die Spitze des Heizmittels 11 kann also auf der Führungsfläche 18 entlanggleiten, ohne durch Stufen, Knicke, Rillen oder dergleichen behindert zu werden.

Dort, wo das Heizelement 11 im Kanal 10 angeordnet ist, wird eine Flüssigkeit, die sich im Kanal 10 befindet, beheizt. Dieser Bereich wird auch als "Heizzone" bezeichnet. Die Heizzone erstreckt sich unter anderem beidseits des Rampenelements 17.

Der Steckverbinder 2 weist ein Wärmeleitelement 19 auf, von dem Fig. 3 eine vergrößerte perspektivische Darstellung zeigt.

Aus Gründen der Übersicht ist dieses Wärmeleitelement in Fig. 1 nicht dargestellt. In Fig. 2 ist das Heizmittel 11 nicht dargestellt.

Das Wärmeleitelement 19 ist aus einem Metall gebildet, insbesondere einem gut wärmeleitenden Metall, wie Aluminium, Kupfer oder Messing.

Das Wärmeleitelement 19 weist einen Befestigungsabschnitt 20 auf, der in den Kanal 10 hineingesteckt ist. Der Befestigungsabschnitt 20 ist klemmend im Kanal 10 gehalten.

Das Wärmeleitelement 19 weist weiterhin einen Wärmeabgabeabschnitt 21 auf, mit dem es in den Aufnahmeraum 7 hineinragt.

Vereinfacht ausgedrückt ist das Wärmeleitelement 19 als Zylinderhülse ausgebildet, deren Außendurchmesser etwa so groß ist, wie der Innendurchmesser des Kanals 10. Dargestellt ist ein Wärmeleitelement 19, das vereinfacht ausgedrückt, die Form eines Kreiszylinders hat. Ein kreisförmiger Querschnitt ist aber nicht erforderlich. Vielmehr können andere Querschnitte vorgesehen sein.

Der Befestigungsabschnitt 20 weist eine U-förmige Ausnehmung 22 auf, die das Rampenelement 17 aufnimmt. Das Wärmeleitelement 19 wird soweit in den Kanal 10 eingeschoben, das ein Ende 23 der Ausnehmung 22 am Rampenelement 17 zur Anlage kommt, wie dies in Fig. 2 zu erkennen ist.

In nicht näher dargestellter Weise weist der Befestigungsabschnitt 20 diametral gegenüberliegend zur Ausnehmung 22 eine in Fig. 3 nicht weiter erkennbare Ausnehmung auf, die an den Außendurchmesser des Heizmittels 11 angepasst ist, so dass der Befestigungsabschnitt 20 mit dieser Ausnehmung auf das Heizmittel 11 aufgeklemmt werden kann. Das Wärmeleitelement 19 steht dann in wärmeleitender Verbindung mit dem Heizmittel 11, so dass Wärme vom Heizmittel 11 auf das Wärmeleitelement 19 übertragen werden kann. Das Wärmeleitelement 19 transportiert diese Wärme dann in den Aufnahmeraum 7.

Der Wärmeabgabeabschnitt 21 weist eine Wand 24 auf, die einen Innenraum 25 umgibt. Die Wand 24 weist in Umfangsrichtung einen Schlitz 26 auf, der parallel zur Längsachse 9 des Steckverbinders 2 verläuft. Durch diesen Schlitz 26 kann Flüssigkeit aus dem Innenraum 25 in den Aufnahmeraum 7 oder vom Aufnahmeraum 7 in den Innenraum 25 treten. Die Wand 24 weist ferner zwei Lamellen 27, 28 auf, die in den Innenraum 25 nach innen gerichtet sind und zu einer Vergrößerung der Fläche des Wärmeabgabeabschnitts 21 beitragen.

Durch diese Form des Wärmeabgabeabschnitts 21 ist es möglich, dass sich Flüssigkeit sowohl innerhalb des Wärmeleitelements 19 befindet, also im Innenraum 25, als auch außerhalb des Wärmeleitelements 19, also zwischen dem Wärmeleitelement 19 und dem Gehäuse 6. Sollte diese Flüssigkeit also eingefroren sein und eine Beheizung erforderlich werden, dann kann das Wärmeleitelement 19 Wärme aus der Heizzone in den Aufnahmeraum führen und diese Wärme radial nach innen und radial nach außen abgeben, so dass die Flüssigkeit relativ schnell aufgetaut werden kann.

Dort, wo der Befestigungsabschnitt 20 in den Wärmeabgabeabschnitt 21 übergeht, weist der Befestigungsabschnitt 20 eine stirnseitige Öffnung 29 auf, durch die Flüssigkeit aus dem Kanal 10 direkt in den Aufnahmeraum 7 gelangen kann. Der Aufnahmeraum 7 erstreckt sich bis zu einer Durchmesserverringerung 30 des Gehäuses 6. Wie in Fig. 2 zu erkennen ist, kann sich auch der Befestigungsabschnitt 20 noch etwas in den Aufnahmeraum 7 hinein erstrecken.

Im Aufnahmeraum 7 ist eine Dichtungsanordnung mit zwei O-Ringen 31, 32 vorgesehen, die dichtend an einem Stutzen anliegen, wenn dieser in den Aufnahmeraum 7 eingeführt wird. Dieser Stutzen ist aus Gründen der Übersicht ebenfalls nicht dargestellt. Das Wärmeleitelement ist durch die Dichtungsanordnung mit den O-Ringen 31, 32 hindurch geführt, so dass sichergestellt ist, dass das Wärmeleitelement 19 bis in den Stutzen hineinragt.

Das Wärmeleitelement 19 erstreckt sich in den Aufnahmeraum 7 bis zur Verriegelungsgeometrie 8. Da die Verriegelungsgeometrie auf einen Bereich des Stutzens wirkt, der vom Ende des Stutzens entfernt ist, ist sichergestellt, dass das Wärmeleitelement 19 bis in den Stutzen hineinragt.

## Patentansprüche

1. Steckverbinder (2) mit einem Gehäuse (6), das einen Aufnahmeraum (7), einen Anschlussstutzen (4) und einen den Aufnahmeraum (7) und den Anschlussstutzen (4) verbindenden Kanal (10) aufweist, wobei im Inneren des Kanals (10) eine Heizzone vorgesehen ist, wobei ein Wärmeleitelement (19) zwischen der Heizzone und dem Aufnahmeraum (7) angeordnet ist, wobei das Wärmeleitelement (19) einen Wärmeabgabeabschnitt (21) aufweist, der als Zylinderhülse ausgebildet ist, die einen Innenraum (25) umgibt, **dadurch gekennzeichnet, dass** die Zylinderhülse einen länglichen Schlitz (26) aufweist.

2. Steckverbinder nach Anspruch 1 **dadurch gekennzeichnet, dass** sich das Wärmeleitelement (19) in den Aufnahmeraum (7) hinein erstreckt.

3. Steckverbinder nach Anspruch 2, **dadurch gekennzeichnet, dass** im Aufnahmeraum (7) eine Dichtungsanordnung (31, 32) angeordnet ist und das Wärmeleitelement (19) durch die Dichtungsanordnung (31, 32) hindurch ragt.

4. Steckverbinder nach einem der Ansprüche 1 bis 3, **dadurch gekennzeichnet, dass** das Wärmeleitelement (19) einen Befestigungsabschnitt (20) aufweist, der in den Kanal (10) hineingesteckt ist.

5. Steckverbinder nach Anspruch 4, **dadurch gekennzeichnet, dass** das Wärmeleitelement (19) entlang seiner Länge eine Außenabmessung aufweist, die maximal so groß ist, wie die Innenabmessung des Kanals (10).

6. Steckverbinder nach Anspruch 4 oder 5, **dadurch gekennzeichnet, dass** das Wärmeleitelement (19) klemmend im Kanal (10) gehalten ist.

7. Steckverbinder nach einem der Ansprüche 1 bis 6, **dadurch gekennzeichnet, dass** das Wärmeleitelement (19) mindestens eine Lamelle (27, 28) aufweist, die in den Innenraum (25) hinein gerichtet ist.

8. Steckverbinder nach Anspruch 7, **dadurch gekennzeichnet, dass** sich die Lamelle (27, 28) an einen Rand des Schlitzes (26) anschließt.

9. Steckverbinder nach einem der Ansprüche 1 bis 8, **dadurch gekennzeichnet, dass** das Wärmeleitelement (19) aus einem Metall, insbesondere Aluminium, Kupfer oder Messing, gebildet ist.

10. Steckverbinder nach einem der Ansprüche 1 bis 9, **dadurch gekennzeichnet, dass** ein Heizelement (11) in der Heizzone angeordnet ist und das Wärmeleitelement (19) mit dem Heizelement (11) in wärmeleitendem Kontakt steht.

11. Steckverbinder nach Anspruch 10, **dadurch gekennzeichnet, dass** das Wärmeleitelement (19) klemmend mit dem Heizelement (11) verbunden ist.

12. Steckverbinder nach Anspruch 10 oder 11, **dadurch gekennzeichnet, dass** ein Rampenelement (17) im Kanal angeordnet ist, entlang dessen das Heizelement (11) aus dem Kanal (10) herausgeführt ist, wobei das Wärmeleitelement (19) eine Ausnehmung (22) aufweist, die das Rampenelement (17) aufnimmt.

13. Steckverbinder nach einem der Ansprüche 1 bis 12, **dadurch gekennzeichnet, dass** das Gehäuse (6) eine bewegliche Verriegelungsgeometrie (8) aufweist und das Wärmeleitelement (19) bis in einen Bereich ragt, in dem die Verriegelungsgeometrie (8) angeordnet ist.

## Claims

1. Plug-in connector (2) comprising a housing (6) which has an accommodation space (7), a connecting piece (4) and a channel (10) that connects the accommodation space (7) and the connecting piece (4), a heating zone being provided in the interior of the channel (10), a heat-conducting element (19) being arranged between the heating zone and the accommodation space (7), the heat-conducting element (19) having a heat output portion (21) designed as a cylinder sleeve that surrounds an inner space (25), **characterised in that** the cylinder sleeve has an elongate slit (26).

2. Plug-in connector according to claim 1, **characterised in that** the heat-conducting element (19) extends into the accommodation space (7).

3. Plug-in connector according to claim 2, **characterised in that** a sealing assembly (31, 32) is arranged in the accommodation space (7) and the heat-conducting element (19) projects through the sealing assembly (31, 32).

4. Plug-in connector according to any of claims 1 to 3, **characterised in that** the heat-conducting element (19) comprises an attachment portion (20) that is inserted into the channel (10).

5. Plug-in connector according to claim 4, **characterised in that** heat-conducting element (19) has, along its length, an outer dimension which is at most the same as the inner dimension of the channel (10).

6. Plug-in connector according to either claim 4 or claim 5, **characterised in that** the heat-conducting element (19) is clamped in the channel (10).

7. Plug-in connector according to any of claims 1 to 6, **characterised in that** the heat-conducting element (19) comprises at least one fin (27, 28) that points into the inner space (25).

8. Plug-in connector according to claim 7, **characterised in that** the fin (27, 28) is attached to an edge of the slit (26).

9. Plug-in connector according to any of claims 1 to 8, **characterised in that** the heat-conducting element (19) is formed from a metal, in particular aluminium, copper or brass.

10. Plug-in connector according to any of claims 1 to 9, **characterised in that** a heating element (11) is arranged in the heating zone and the heat-conducting element (19) is in contact with the heating element (11) in a heat-conducting manner.

11. Plug-in connector according to claim 10, **characterised in that** the heat-conducting element (19) is clamped to the heating element (11).

12. Plug-in connector according to either claim 10 or claim 11, **characterised in that** a ramp element (17) is arranged in the channel, along which ramp element the heating element (11) is guided out of the channel (10), the heat-conducting element (19) having a recess (22) that accommodates the ramp element (17).

13. Plug-in connector according to any of claims 1 to 12, **characterised in that** the housing (6) comprises a movable locking geometry (8) and the heat-conducting element (19) projects as far as into a region in which the locking geometry (8) is arranged.

## Revendications

1. Connecteur enfichable (2) avec un boîtier (6), qui présente un espace récepteur (7), un raccord (4) et un canal (10) reliant l'espace récepteur (7) et le raccord (4), dans lequel il est prévu à l'intérieur du canal (10) une zone de chauffage, dans lequel un élément thermoconducteur (19) est aménagé entre la zone de chauffage et l'espace récepteur (7), dans lequel l'élément thermo-conducteur (19) présente une section de dégagement de chaleur (21), qui est conformé en douille cylindrique qui entoure un espace interne (25), **caractérisé en ce que** la douille cylindrique présente une fente allongée (26).

2. Connecteur enfichable selon la revendication 1, **caractérisé en ce que** l'élément thermoconducteur (19) s'étend dans l'espace récepteur (7).

3. Connecteur enfichable selon la revendication 2, **caractérisé en ce qu'**un dispositif d'étanchéité (31, 32) est aménagé dans l'espace récepteur (7) et l'élément thermoconducteur (19) passe à travers le dispositif d'étanchéité (31, 32).

4. Connecteur enfichable selon l'une quelconque des revendications 1 à 3, **caractérisé en ce que** l'élément thermoconducteur (19) présente une section de fixation (20) qui est enfichée dans le canal (10).

5. Connecteur enfichable selon la revendication 4, **caractérisé en ce que** l'élément thermoconducteur (19) présente sur sa longueur une dimension externe qui est au maximum aussi grande que la dimension interne du canal (10).

6. Connecteur enfichable selon la revendication 4 ou la revendication 5, **caractérisé en ce que** l'élément thermoconducteur (19) est maintenu dans le canal (10) par blocage.

7. Connecteur enfichable selon l'une quelconque des revendications 1 à 6, **caractérisé en ce que** l'élément thermoconducteur (19) présente au moins une lamelle (27, 28) qui est dirigée vers l'intérieur dans l'espace interne (25).

8. Connecteur enfichable selon la revendication 7, **caractérisé en ce que** la lamelle (27, 28) se raccorde à un bord de la fente (26).

9. Connecteur enfichable selon l'une quelconque des revendications 1 à 8, **caractérisé en ce que** l'élément thermoconducteur (19) est formé d'un métal, en particulier d'aluminium, de cuivre ou de laiton.

10. Connecteur enfichable selon l'une quelconque des revendications 1 à 9, **caractérisé en ce qu'**un élément de chauffage (11) est aménagé dans la zone de chauffage et l'élément thermoconducteur (19) est en contact thermoconducteur avec l'élément de chauffage (11).

11. Connecteur enfichable selon la revendication 10, **caractérisé en ce que** l'élément thermoconducteur (19) est relié à l'élément de chauffage (11) par blocage.

12. Connecteur enfichable selon la revendication 10 ou la revendication 11, **caractérisé en ce qu'**un élément de rampe (17) est aménagé dans le canal, le long duquel élément l'élément de chauffage (11) est guidé hors du canal (10), dans lequel l'élément thermoconducteur (19) présente une cavité (22) qui reçoit l'élément de rampe (17).

13. Connecteur enfichable selon l'une quelconque des revendications 1 à 12, **caractérisé en ce que** le boîtier (6) présente une géométrie de verrouillage mobile (8) et l'élément thermoconducteur (19) dépasse jusque dans une zone où la géométrie de verrouillage (8) est aménagée.
